# EUROPEAN PATENT APPLICATION

(11) **EP 4 213 233 A1**
(43) Date of publication of application: **19.07.2023**
(21) Application number: 21867025.5
(22) Date of filing: 26.08.2021
(51) Int. Cl.: H01M 4/13, H01M 4/134, H01M 4/62, H01M 4/66, H01M 10/052, H01M 4/02

(54) **NEGATIVE ELECTRODE FOR LITHIUM SECONDARY BATTERY, AND LITHIUM SECONDARY BATTERY INCLUDING SAME**

(30) Priority: 08.09.2020 KR 20200114709
(71) Applicant: Samsung SDI Co., Ltd., Yongin-si, Gyeonggi-do 17084 (KR); Seoul National University R & DB Foundation, Seoul 08826 (KR)
(72) Inventor: HWANG, Taehyun, Yongin-si, Gyeonggi-do 17084 (KR); KANG, Kisuk, Seoul 06327 (KR); KANG, Yoon-Sok, Yongin-si, Gyeonggi-do 17084 (KR); KIM, Youngsoo, Yongin-si, Gyeonggi-do 17084 (KR); PARK, Jinhwan, Yongin-si, Gyeonggi-do 17084 (KR); HONG, Suk-Gi, Yongin-si, Gyeonggi-do 17084 (KR); NONGLAK, Meethong, Seoul 08826 (KR); ORAPA, Tamwattana, Seoul 08826 (KR); KIM, Jihyeon, Seoul 08786 (KR); PARK, Hyeokjun, Seongnam-si, Gyeonggi-do 13532 (KR); YOON, Gabin, Seoul 06764 (KR)
(74) Representative: Marks & Clerk LLP
(86) International application number: PCT/KR2021/011479
(87) International publication number: WO 2022/055159

(57) **Abstract**

The present invention relates to a negative electrode for a lithium secondary battery, and a lithium secondary battery including the same, wherein the negative electrode comprises a current collector, and a coating layer which is located on the current collector and comprises polyvinylidene fluoride polymer and LiF.

## Description

### TECHNICAL FIELD

This relates to a negative electrode for a lithium secondary battery and a lithium secondary battery including the same.

### BACKGROUND ART

Recently, the rapid supplement of electronic devices such as mobile phones, laptop computers, and electric vehicles using batteries require surprising increases in demands for secondary batteries with relatively high capacity and lighter weight. Particularly, a lithium secondary battery has recently drawn attention as a driving power source for portable devices, as it has lighter weight and high energy density. Accordingly, researches for improving performances of lithium secondary batteries are actively studied.

Recently, a lithium secondary battery exhibiting a higher energy density is required, and thus, it is expected for lithium having high specific capacity (about 3860 mAh/g) and low voltage (about ~3.04 V vs. SHE) as a negative active material. However, when lithium metal is applied into the negative electrode, the high reactivity of lithium metal causes an explosive reaction with water and with oxygen of an atmosphere, and thus, it is difficult to fabricate and to use in the general environment.

### TECHNICAL PROBLEM

One embodiment provides a negative electrode for a lithium secondary battery exhibiting stable, high capacity, high energy density, and excellent cycle-life characteristics.

Another embodiment provides a lithium secondary battery including the negative electrode.

### TECHNICAL SOLUTION

One embodiment provides a negative electrode for a lithium secondary battery including a current collector and a coating layer position on the current collector, and including a polyvinylidene fluoride-based polymer and LiF.

In the coating layer, the polyvinylidene fluoride-based polymer may be included in a larger amount than LiF. In one embodiment, a mixing ratio of the polyvinylidene fluoride-based polymer and the LiF may be a 9:1 to 5:5 by weight ratio.

The polyvinylidene fluoride-based polymer may be polyvinylidene fluoride, a polyvinylidene fluoride and hexafluoropropylene copolymer (PVdF-HFP), or combinations thereof.

The LiF may have a nanometer size, and LiF may have a particle diameter of 5 nm to 1000 nm.

The coating layer may have a thickness of 1 µm to 10 µm.

According to another embodiment, a lithium secondary battery including a negative electrode including a current collector, a lithium metal-included layer, a coating layer including a polyvinylidene fluoride-based polymer, and LiF; a positive electrode including a positive active material; and an electrolyte.

The lithium secondary battery may be a battery subjected to a formation charge and discharge, or may be a battery subjected to a formation charge and discharge at 0.3 C to 1 C once to 3 times.

### ADVANTAGEOUS EFFECTS

A negative electrode for a lithium secondary battery according to one embodiment may exhibit good safety and good capacity energy density and cycle-life characteristics.

### BRIEF DESCRIPTION OF THE DRAWINGS

FIG. 1 is a schematic view showing a structure of the negative electrode for a lithium secondary battery.
FIG. 2 schematically shows a structure of the negative electrode in the lithium secondary battery which is subjected to a formation charge and discharge.
FIG. 3 is a schematic view showing a lithium secondary battery according to one embodiment.
FIG. 4 is a graph showing dielectric constants of the coating layer in the negative electrodes according to Example 1 and Comparative Example 1.
FIG. 5 is a graph showing interface resistances of the coating layer of in the negative electrodes according to Example 1 and Comparative Example 1.
FIG. 6 is a graph showing a first initial overpotential of the half-cells using the negative electrodes according to Example 1 and Comparative Examples 1 and 2.
FIG. 7 is a graph showing Coulombic efficiency of the half-cells using the negative electrodes of Example 1, and Comparative Examples 1 and 2.
FIG. 8 is SEM images of the negative electrodes during charging of the half-cells using the negative electrode of Example 1 and Comparative Examples 1 and 2.
FIG. 9 is SEM images showing the states of the negative electrode during charge and discharge of the half-cell according to Example 1.

### MODE FOR INVENTION

Hereinafter, embodiments are described in detail. However, these embodiments are exemplary, the present invention is not limited thereto and the present invention is defined by the scope of claims.

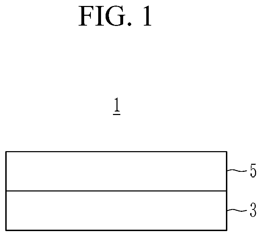

A negative electrode for a lithium secondary battery according to one embodiment includes a current collector and a coating layer positioned on the current collector, and including a polyvinylidene fluoride-based polymer and LiF. FIG. 1 schematically shows the negative electrode 1 which includes a current collector 3 and a coating layer 5.

As such, the negative electrode for a lithium secondary battery does not include a negative active material, and such a lithium secondary battery generally is called an anodeless or anode-free battery. As such a lithium secondary battery includes a negative active material, it is economical and has advantageous in terms of energy density. In addition, during charging and discharging of the lithium secondary battery, lithium ions released from a positive active material are deposited on a negative current collector and lithium deposited on the negative current collector acts and is used as a negative active material. That is, lithium released from the positive active material during charging and discharging is passed through a separator and the coating layer to accumulate on the current collector, thereby positioning between the current collector and the coating layer. Thus, it uses lithium as an active material, rendering high capacity and low voltage, and safety may be secured in the battery fabrication, as lithium metal is not used in the battery fabrication.

The coating layer according to one embodiment includes a polyvinylidene fluoride-based polymer and LiF, and the coating layer may have a higher dielectric constant, lower interfacial resistance, and reduced local current density than a layer including only polyvinylidene fluoride-based polymer. Accordingly, lithium ions which are released from the positive active material and are transferred to the negative electrode may be readily passed through the coating layer, and thus, lithium may be very uniformly deposited on the current collector, thereby suppressing growth of lithium dendrites.

If lithium dendrites are formed in accumulation of lithium on the current collector, they convert to dead lithium which does not participate to a charging and discharge reaction, during discharging in which conductive connection is stopped, and resultantly, capacity and cycle-life may be deteriorated. Furthermore, when lithium dendrites are continuously grown, they may pass through the separator to directly contact to the positive electrode, thereby causing the short circuit and thermal runaway, so that the safety may be deteriorated.

Whereas the negative electrode for a lithium secondary battery including the coating layer may effectively prevent the lithium dendrite growth, and thus, the problems caused from lithium dendrites may be effectively inhibited and the cycle-life characteristics may be improved.

When the lithium secondary battery including the negative electrode is discharged, lithium positioned between the current collector and the coating layer is moved to the positive electrode, causing contact between the coating layer and the current collector. As the coating layer according to one embodiment has excellent mechanical strength, the structure may be well maintained, even after repeated charging and discharging, enabling stable charging and discharging and improving the cycle-life characteristics.

In the coating layer according to one embodiment, it is desirable that the polyvinylidene fluoride-based polymer is present in a larger amount than LiF, and for example, a mixing ratio of the polyvinylidene fluoride-based polymer and LiF may be a 9:1 to 5:5 by weight ratio. According to another embodiment, the mixing ratio of the polyvinylidene fluoride-based polymer and LiF may be a 9:1 to 6:4 by weight ratio.

In the coating layer, the larger amount of the polyvinylidene fluoride-based polymer than LiF may allow producing of a more stable protective layer, and such effects may be more increased at the mixing ratio within the above range of the polyvinylidene fluoride and LiF. If the amount of LiF is larger than that of the polyvinylidene fluoride-based polymer, it may be difficult to produce the stable protective layer.

The polyvinylidene fluoride-based polymer may be polyvinylidene fluoride, polyvinylidene fluoride and hexafluoropropylene copolymer (PVdF-HFP), or combinations thereof.

In the coating layer, the LiF may have a nanometer size, and LiF may have a particle diameter of 5 nm to 1000 nm, e.g., 10 nm to 1000 nm, 10 nm to 500 nm, 10 nm to 400 nm, 10 nm to 300 nm, 10 nm to 200 nm, or 10 nm to 100 nm. When LiF has a nanometer size, it may be uniformly distributed in the coating layer, and particularly, LiF particles may be more uniformly positioned between the polyvinylidene fluoride-based polymer, and thus the dielectric constant may be increased and the interfacial resistance may be reduced.

The particle diameter of LiF in the coating layer may be maintained after charging and discharging of a battery including the negative electrode including the same, so that LiF presented in the negative electrode of the lithium secondary battery subjected to formation, may be presented in the above range.

In the specification, a particle diameter may be an average particle diameter of particles. In this case, the average particle diameter may mean a particle diameter (D50) measured as a cumulative volume. When a definition is not otherwise provided, an average particle diameter indicates an average particle diameter (D50) where a cumulative volume is about 50 volume% in a particle distribution.

The average particle diameter (D50) may be measured by a method well known to those skilled in the art, for example, by a particle size analyzer, or by a transmission electron microscopic image or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

A thickness of the coating layer may be 1 µm to 10 µm, 1 µm to 7 µm, or 1 µm to 5 µm. The thickness of the coating layer within the range allows to uniformly deposit lithium released from the positive active material on the current collector and improve the cycle-life characteristic.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The negative electrode according to one embodiment may be prepared by coating a composition for a coating layer on a current collector. The composition for the coating layer may be prepared by mixing polyvinylidene fluoride and LiF in a solvent. The solvent may be any solvent being capable of dissolving polyvinylidene fluoride and LiF, and the example thereof may 2-hydroxypropyl methacrylamide (HPMbA), 2,4,6-trimethylphenol (TMP), N-methyl-2-pyrrolidone (NMP), dimethylacetamide (DMAc), dimethylformamide (DMF), dimethyl sulfoxide (DMSO), or combinations thereof.

The mixing may be performed by using a ball mill.

An amount of solid in the composition may be 5 wt% to 20 wt% based on the total, 100 wt%, of the composition. When the amount of the solid is satisfied into the range, the suitable solvation may occur, thereby uniformly mixing a polyvinylidene fluoride-based polymer and LiF, and obtaining a sufficient viscosity to coat and dry. In addition, the composition for the coating layer includes the solid within the above range, and herein, it is desired that polyvinylidene fluoride is included in a larger amount than LiF. For example, a mixing ratio of polyvinylidene fluoride and LiF may be a 9:1 to 5:5 by weight ratio. According to another embodiment, the mixing ratio of the polyvinylidene fluoride-based polymer and LiF may also be a 9:1 to 6:4 by weight ratio.

The LiF may have a nanometer size, and may have a particle diameter of 5 nm to 1000 nm, for example, 10 nm to 1000 nm, 10 nm to 500 nm, and may desirably have a particle diameter of 10 nm to 400 nm, 10 nm to 300 nm, 10 nm to 200 nm, or 10 nm to 100 nm. LiF having such a nanometer size may be prepared by general pulverization techniques, and for example, ball milling.

The coating process may be performed by general coating techniques such as a doctor blade and the like.

After coating, a drying process may be performed. The drying may be performed at 25 °C to 80 °C. When the drying is performed at a temperature range, the composition of the coating layer is not modified, solvent may be substantially and completely dried. The time for drying is not specifically necessary to be limited, but, for example, it may be performed for 2 hours to 12 hours.

Another embodiment provides a lithium secondary battery including the negative electrode, a positive electrode including a positive active material, and an electrolyte.

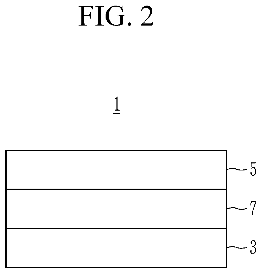

When the lithium secondary battery is formation charged and discharged, lithium ions are released from the positive electrode and moved to the negative electrode, thereby accumulating on the current collector, and resultantly, the negative electrode 1 may include the current collector 3 and the coating layer 5, and a lithium metal-included layer 7 between the current collector 3 and the coating layer 5, as shown in FIG. 2. Thus, in the lithium secondary battery according to one embodiment, the negative electrode may include the current collector, the lithium metal-included layer, and the coating layer including polyvinylidene fluoride and LiF. The formation charge and discharge may be performed at 0.3 C to 1 C once to 3 times.

In the negative electrode, the thickness of the lithium metal-included layer may be appropriately controlled depending on the amount of lithium included a counter electrode, e.g., a positive electrode, and for example, may be more than 0 µm, and 100 µm or less. In addition, the thickness of the lithium metal-included layer may be adjusted in the above range of the thickness according to degree of charge and discharge.

The positive electrode includes a current collector and a positive active material layer including a positive active material and formed on the current collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D₂ (0.90 ≤ a≤1.8, 0 ≤ b≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0 ≤ b ≤ 0.5, 0 ≤ c ≤ 0.05); LiₐE_{2-b}X_{b}O_{4-c}D_{c} (0 ≤ b ≤ 0.5, 0 ≤ c ≤ 0.05); LiₐNi_{1-b-c}Co_{b}X_{c}Dₐ (0.90 ≤ a ≤ 1.8, 0 ≤ b ≤ 0.5,0 ≤ c ≤ 0.5, 0 < α ≤2); LiₐNi_{1-b-c}Co_{b}X_{c}O₂₋ₐT_{α} (0.90 ≤ a≤ 1.8,0 ≤ b ≤ 0.5, 0 ≤ c ≤ 0.5, 0 < α < 2); LiₐNi_{1-b-c}Co_{b}X_{c}O₂₋ₐT₂ (0.90 ≤ a ≤ 1.8, 0 ≤ b ≤0.5, 0 ≤ c ≤ 0.5, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}T₂ (0.90 ≤ a≤ 1.8, 0 ≤ b ≤0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂ PO₄₃ (0 ≤ f ≤2); Li _{(3-f)}Fe₂ PO₄₃ (0 ≤ f ≤ 2); LiₐFePO₄ (0.90 ≤ a ≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the amount of the binder may be 0.3 wt% to 5 wt based on the total amount of the positive active material layer, and the amount of the conductive material may be 0.5 wt% to 10 wt based on the total amount of the positive active material layer.

The binder improves binding properties of positive active material particles with one another and with a current collector. The examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, a nickel foil, or a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), butylene carbonate (BC), vinyl ethylene carbonate, and the like. The ester-based solvent may include methyl acetate, ethyl acetate, n-propyl acetate, t-butyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. Furthermore, the ketone-based solvent may include cyclohexanone, and the like. In addition, the alcohol-based solvent may include ethyl alcohol, isopropyl alcohol, and the like, and examples of the aprotic solvent may include nitriles such as acetonitrile, propionitrile, butyronitrile, and the like, represented by R-CN (where R is a C2 to C20 linear, branched, or cyclic hydrocarbon, or may include a double bond, an aromatic ring, or an ether bond), amides such as dimethylformamide, dioxolanes such as 1,3-dioxolane, 1,4-dioxolane, sulfolanes, and the like.

In addition, the non-aqueous organic solvent may include phosphorous-based solvent such as trimethyl phosphate, triethyl phosphate, triphenyl phosphate, tris(2,2,2-trifluoroethyl)phosphate, tris(2,2,2-trifluoroethyl)phosphite or combinations thereof, and may include sulfones such as dimethyl sulfone, ethyl methyl sulfone, or combinations thereof.

The organic solvent may be used alone or in a mixture, and when the organic solvent is used in a mixture, the mixture ratio may be controlled in accordance with a desirable battery performance and it may be well understood to one of ordinary skill in the related art.

Furthermore, the carbonate-based solvent may include a mixture of a cyclic carbonate and a linear carbonate. Herein, when the mixture of cyclic carbonate and linear carbonate mixed together in a volume ratio of about 1:1 to about 1:9 is used as an electrolyte, it may have enhanced performance.

The organic solvent may further include an aromatic hydrocarbon-based organic solvent in addition to the carbonate-based solvent. Herein, the carbonate-based solvent and the aromatic hydrocarbon-based organic solvent may be mixed at a volume ratio of 1:1 to 30:1.

The aromatic hydrocarbon-based organic solvent may be an aromatic hydrocarbon-based compound of Chemical Formula 1. 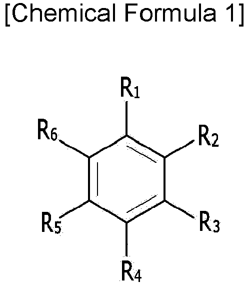 (In Chemical Formula 1, R₁ to R₆ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound of Chemical Formula 3 in order to improve a cycle-life of a battery. 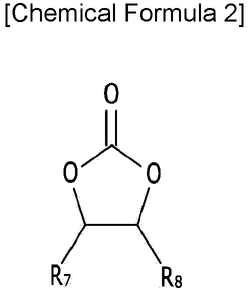 (In Chemical Formula 2, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R₇ and R₈ are not hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the additive for improving a cycle-life may be used within an appropriate range.

The lithium salt dissolved in an organic solvent supplies a battery with lithium ions, basically operates the lithium secondary battery, and improves transportation of the lithium ions between positive and negative electrodes. Examples of the lithium salt include one or two or more one supporting salt selected from LiPF₆, LiBF₄, LiSbF₆, LiAsF₆, LiN(SO₂C₂F₅)₂, Li(CF₃SO₂)₂N, LiN(SOsC₂F₅)₂, Li(FSO₂)₂N (lithium bis(fluorosulfonyl)imide: LiFSI), lithium bis(trifluoromethane sulfonyl)imide: LiTFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein, x and y are natural numbers, for example an integer ranging from 1 to 20, lithium difluoro(bisoxolato) phosphate, LiCl, Lil and LiB(C₂O₄)₂(lithium bis(oxalato) borate: LiBOB), and lithium difluoro(oxalato) borate, LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The electrolyte may further LiNOs as an additive, and an amount of the additive may be more than 0 wt% and 2 wt% or less based on the total 100 wt%, of the electrolyte, or 0.1 wt% to 0.5 wt%. When the electrolyte further includes LiNOs, the deposition of lithium on a negative current collector may form more stable lithium layer during charging.

The lithium secondary battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

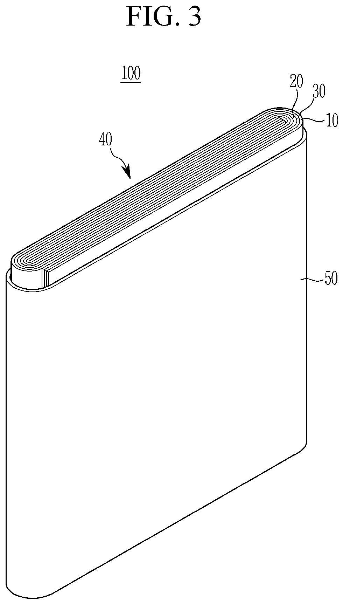

FIG. 3 is an exploded perspective view of a lithium secondary battery according to one embodiment. The lithium secondary battery according to an embodiment is illustrated as a prismatic battery but is not limited thereto and may include variously-shaped batteries such as a cylindrical battery, a pouch battery, and the like.

Referring to FIG. 3, a lithium secondary battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

### MODE FOR PERFORMING THE INVENTION

Hereinafter, examples of the present invention and comparative examples are described. These examples, however, are not in any sense to be interpreted as limiting the scope of the invention.

### (Example 1)

LiF was used with a ball mill to prepare a nano LiF with an average particle diameter, D50, of about 13 nm.

Polyvinylidene fluoride and the prepared nano LiF were mixed at a 7:3 by weight ratio in a dimethyl acetate solvent to prepare a composition for a coating layer composition. In the composition for the coating layer composition, an amount of solid was set to be 10 wt% based on the total, 100 wt%, of the composition for the coating layer.

The obtained composition for the coating layer was coated on a copper foil current collector using a doctor blade and dried at 40 °C to prepare a coating layer including polyvinylidene and LiF, with a 3 µm thickness on the current collector, thereby producing a negative electrode.

### (Comparative Example 1)

Polyvinylidene fluoride was added to a dimethyl acetate solvent to prepare a composition for a coating layer. In the composition for the coating layer, an amount of solid was set to be 10 wt% based on the total, 100 wt%, of the composition for the coating layer.

The obtained composition for the coating layer was coated on a copper foil current collector using a doctor blade and dried at 40 °C to prepare a coating layer including polyvinylidene and LiF, with a 3 µm thickness on the current collector, thereby producing a negative electrode.

### (Comparative Example 2)

Only a copper current collector with a thickness of 12 µm was used as a negative electrode.

### Experimental Example 1) Measurement of dielectric constant

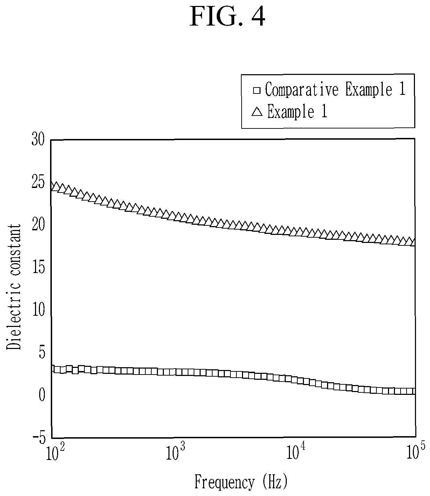

After collecting the coating layer from the negative electrodes according to Example 1 and Comparative Example 1, a dielectric constant of the coating layer was measured by using a Keysight E4990A Impedance Analyzer in the range of a frequency of 20 Hz to 100 Hz, and the results are shown in FIG. 4. As shown in FIG. 4, the coating layer including polyvinylidene fluoride and LiF of Example 1 exhibited a very much larger dielectric constant, than that including only polyvinylidene fluoride of Comparative Example 1.

### Experimental Example 2) Measurement of interfacial resistance

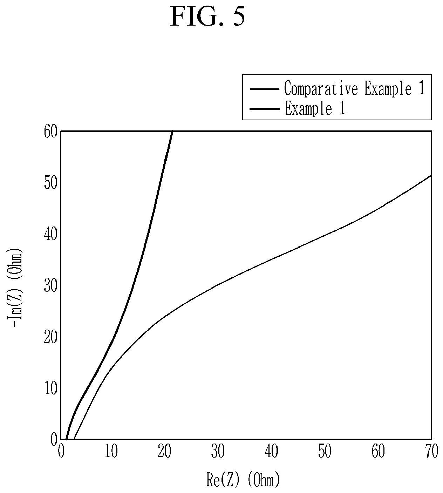

After collecting the coating layer from the negative electrodes according to Example 1 and Comparative Example 1, the interfacial resistance was measured by using a VSP-300 Bio-Ligic Science Instruments (France) in the range of 1.0 GHz to 1.0 Hz, and the results are shown in FIG. 5.

FIG. 5 indicated that the coating layer including polyvinylidene fluoride and LiF of Example 1 exhibited low interfacial resistance. As such, the low interfacial resistance may reduce a nucleation overpotential in which lithium may be initially generated, when lithium ions are deposited on the negative electrode.

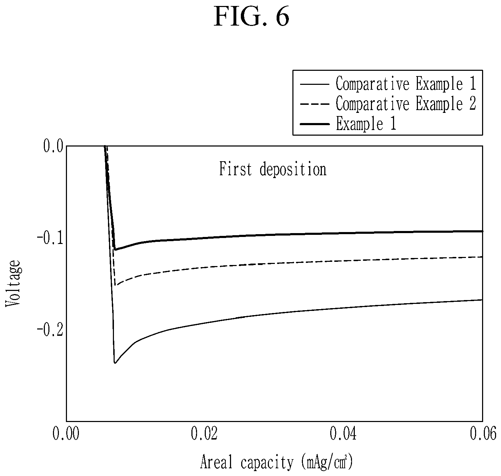

In addition, as can be seen in FIG. 6 showing the overpotential of the first charge, the decreases in the nucleation overpotential may be clearly shown from the lower overpotential compared with Comparative Examples 1 and 2. From these results, it can be seen that lithium may be uniformly deposited on the current collector.

### Experimental Example 3) Measurement of Coulombic efficiency

Half-cells were fabricated using the negative electrodes of Example 1 and Comparative Examples 1 and 2, a lithium metal counter electrode, and an electrolyte by a general technique. Herein, as the electrolyte, LiNOs additive was added to a mixed solvent of 1,3-dioxolane and 1,2-dimethoxyethane (1:1 volume ratio)) in which 1.0 M lithium bis(trifluoromethane sulfonyl)imide (LiTFSI) was dissolved, was used, and the amount of the was 3.0 wt% based on 100 wt% of the electrolyte.

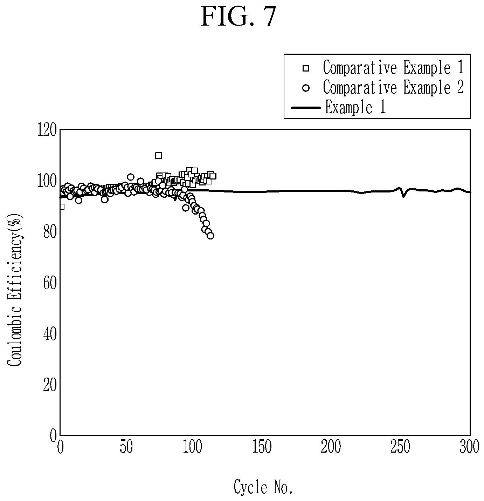

The half-cell was charged and discharged at 2C (1mAh/cm²) to 0.5mAh/cm² for 300 cycles to measure Coulombic efficiency, and the results are shown in FIG. 7. As shown in FIG. 7, the half-cell using the negative electrode with the coating layer including polyvinylidene fluoride and LiF of Example 1 exhibited Coulombic efficiency of about 95 % to 99 % which was uniformly maintained even after 300 charging and discharging cycles. Whereas, the half-cell using the negative electrode with the coating layer including only polyvinylidene fluoride of Comparative Example 1 was occurred abnormal behavior due to the dendrite generation after 120 charge and discharge cycles, and thus, charge and discharge cannot be proceeded any more. Similarly, Comparative Example 2 using only copper current collector as the negative electrode also exhibited surprisingly decreased Coulombic efficiency at 100 charge and discharge cycles.

### Experimental Example 4) SEM photograph

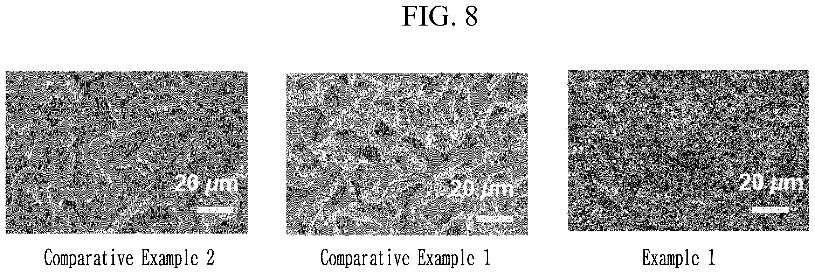

The half-cell used in the Experimental Example 3 was once charged under the same condition to the Experimental Example 3, and the SEM photograph of the negative electrode was taken to show the results in FIG. 8.

As shown in FIG. 8, it can be seen that in case of Comparative Example 2 in which only copper current collector was used as the negative electrode, the dendrites in which lithium was partially grown were formed in a tube form. In addition, in case of Comparative Example 1 with the coating layer only including polyvinylidene fluoride, the coating layer was not completely covered on the agglomeration of lithium to expose to a surface.

Whereas in the negative electrode with the coating layer including polyvinylidene fluoride and LiF of Example 1, lithium was not exposed to a surface, as lithium was completely covered with the coating layer. Resultantly, it can be shown that the negative electrode including the coating layer of Example 1 effectively suppressed the short circuit due to lithium dendrites.

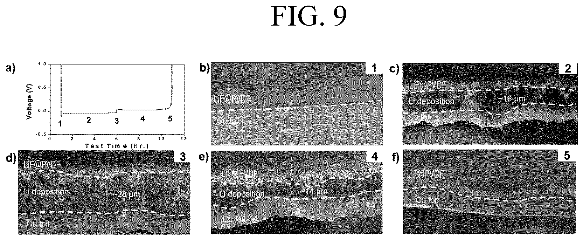

For identifying the change in the negative electrode depending on charging and discharging in the half-cell including the negative electrode of Example 1, the charging and discharging were performed according the voltage profile during the charging and discharging shown in a of FIG. 9 including the SEM photograph of the one side of the negative electrode prior to charge and discharge (b of FIG. 9, 1), that (c of FIG. 9, 2) after the charging start SOC50 (charged in a charge state to be 50 % of charge capacity based on 100 % of entire battery charge capacity), that (d of FIG. 9, 3) after charge SOC100 (charged in a charge state to be 100 % of charge capacity based on 100 % of entire battery charge capacity), that (e of FIG. 9, 4) of discharge start SOC50 (charged in a charge state to be 50 % of discharge capacity based on 100 % of entire battery discharge capacity), and that after completely charge (f of FIG. 9, 5).

As shown in FIG. 9, the negative electrode before charging and discharging, included the current collector (Cu foil) and the coating layer (marked as LiF@PVDF), and then when the charging proceeded, lithium transferred from the positive active material was deposited on the collector to be positioned between the current collector and the coating layer in the thickness of 0 µm or more, and 28 µm or less, depending on the charging state.

While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A negative electrode for a lithium secondary battery, comprising:
a current collector; and
a coating layer positioned on the current collector and comprising a polyvinylidene fluoride-based polymer and LiF.

2. The negative electrode for a lithium secondary battery of claim 1, wherein the polyvinylidene fluoride-based polymer is comprised in a larger amount than LiF in the coating layer.

3. The negative electrode for a lithium secondary battery of claim 1, wherein a mixing ratio of the polyvinylidene fluoride-based polymer and the LiF is a weight ratio of 9:1 to 5:5.

4. The negative electrode for a lithium secondary battery of claim 1, wherein the polyvinylidene fluoride-based polymer is polyvinylidene fluoride, a polyvinylidene fluoride and hexafluoropropylene copolymer (PVdF-HFP), or combinations thereof.

5. The negative electrode for a lithium secondary battery of claim 1, wherein the LiF has a particle diameter of 5 nm to 1000 nm.

6. The negative electrode for a lithium secondary battery of claim 1, wherein the coating layer has a thickness of 1 µm to 10 µm.

7. A lithium secondary battery, comprising:
a negative electrode comprising a current collector, a lithium metal-included layer, and a coating layer comprising a polyvinylidene fluoride-based polymer and LiF;
a positive electrode comprising a positive active material; and
an electrolyte.

8. The lithium secondary battery of claim 7, wherein the lithium secondary battery is a formation charged and discharged lithium secondary battery.

9. The lithium secondary battery of claim 7, wherein the lithium secondary battery is a battery subjected to a formation charge and discharge at 0.3 C to 1 C once to 3 times.
